# EUROPÄISCHE PATENTSCHRIFT

(11) **EP 1 286 088 B1**
(45) Veröffentlichungstag und Bekanntmachung des Hinweises auf die Patenterteilung: **17.12.2003**
(21) Anmeldenummer: 01119975.9
(22) Anmeldetag: 18.08.2001
(51) Int. Cl.: F16H 63/18

(54) **Schaltanordnung für ein mehrgängiges Schaltgetriebe**
Shifting arrangement for multiple ratio transmission
Dispositif de changement de vitesse pour transmission à plusieurs rapports

(43) Veröffentlichungstag der Anmeldung: 26.02.2003
(73) Patentinhaber: Getrag Ford Transmissions GmbH, 50725 Köln (DE)
(72) Erfinder: Bungart, Stephan, 42855 Remscheid (DE)
(74) Vertreter: Steil, Christian, Dipl.-Ing.

(56) Entgegenhaltungen:
- DE-A- 19 543 645
- DE-A- 19 920 440

## Beschreibung

Die vorliegende Erfindung betrifft eine Schaltanordnung für ein mehrgängiges Schaltgetriebe, insbesondere für Kraftfahrzeuge, mit zwei Schaltwalzen, die jeweils wenigstens einem Gang zugeordnet sind, und mit zwei Elektromotoren, die jeweils eine der zwei Schaltwalzen antreiben.

Eine derartige Schaltanordnung ist bekannt aus der DE 199 20 440 A1.

Bei Stufengetrieben in Stirnradbauweise besteht seit einigen Jahren eine vermehrte Tendenz, die Schaltvorgänge zu automatisieren. Man unterscheidet im wesentlichen zwischen sogenannten automatisierten Schaltgetrieben und Doppelkupplungsgetrieben. Antriebsstränge mit automatisierten Schaltgetrieben ähneln klassischen Antriebssträngen mit manuellem Schaltgetriebe für Kraftfahrzeuge mit Verbrennungsmotor. Zwischen der Abtriebswelle des Verbrennungsmotors und dem Schaltgetriebe ist eine einzelne Anfahr- und Trennkupplung angeordnet.

Bei Doppelkupplungsgetrieben beinhaltet der Antriebsstrang zwei parallele Kraftübertragungszweige, denen jeweils eine eigene Trennkupplung zugeordnet ist.

Zum automatisierten Schalten derartiger Schaltgetriebe unterscheidet man generell zwischen hydraulischen Schaltanordnungen und elektromechanischen Schaltanordnungen. Bei hydraulischen Schaltanordnungen werden Schaltmuffen zum Betätigen von Schaltkupplungen durch hydraulische Kolben-/Zylindereinheiten betätigt. Die Schaltkupplungen können Synchronkupplungen oder nicht-synchronisierte Schaltkupplungen sein.

Bei den elektromotorisch geschalteten Schaltgetrieben wird häufig eine Schaltwalze als Rotations-Translationswandler verwendet. Schaltwalzen sind an sich aus dem Motorradgetriebebau seit langem bekannt. In der Schaltwalze sind eine oder mehrere Umfangsspuren vorgesehen, die formschlüssig mit einer Schaltmuffe zusammenarbeiten. Eine Drehung der Schaltwalze bewirkt einen axialen Versatz einer Schaltmuffe.

Generell werden Schaltwalzen so eingesetzt, daß sequentiell geschaltet wird, also die Reihenfolge der Gänge beim Schalten streng eingehalten wird. Ein Beispiel für eine derartige sequentielle Schaltwalzenaktuatorik ist bekannt aus dem Getriebe für den SMART (EP-A-0798145).

Um beispielsweise schnell von einem hohen Gang in den ersten Gang zurückzuschalten, ohne die dazwischen liegenden Gänge einlegen zu müssen, ist es beispielsweise aus der DE 195 43 645 A1 bekannt, die Umfangsspuren abschnittsweise breiter auszubilden und die Schaltwalze insgesamt axial verschieblich zu lagern.

Aus der eingangs genannten DE 199 20 440 A1 ist es bekannt, für ein Stufengetriebe für ein Kraftfahrzeug zwei Schaltwalzen vorzusehen, von denen eine den ungeraden Gängen (1, 3, 5, R) und die andere den geraden Gängen (2, 4, 6) zugeordnet ist.

Die zwei Schaltwalzen werden durch zwei unabhängig voneinander ansteuerbare Elektromotoren angetrieben, und die Elektromotoren sind in einem gemeinsamen Gehäuse aufgenommen. Es ist offenbart, daß die Schaltwalzen parallel oder koaxial zueinander ausgerichtet sein können. In einer Ausführungsform mit paralleler Schaltwalzenanordndung sind die zwei Elektromotoren ebenfalls parallel zueinander ausgerichtet und jeweils über ein drehmomenterhöhendes Stirnradgetriebe mit den Schaltwalzen gekoppelt.

Vor diesem Hintergrund ist es die Aufgabe der vorliegenden Erfindung, eine kompakte und leicht montierbare Schaltanordnung anzugeben.

Diese Aufgabe wird erfindungsgemäß bei der eingangs genannten Schaltanordnung dadurch gelöst, daß die zwei Elektromotoren koaxial zueinander angeordnet sind, so, daß die Abtriebswellen der zwei Elektromotoren aufeinander zuweisen, daß ferner die zwei Elektromotoren über ein Zwischengehäuse miteinander verbunden sind und daß das Zwischengehäuse eine Öffnung aufweist, durch die hindurch sich von den Elektromotoren angetriebene Antriebsmittel zum Antreiben der Schaltwalzen erstrecken.

Die Aufgabe wird auf diese Weise vollkommen gelöst.

Durch die Ausrichtung der zwei Elektromotoren derart, daß deren Abtriebswellen aufeinander zu weisen, kann die getriebliche Verbindung zwischen Elektromotoren und Schaltwalzen auf engem Raum realisiert werden.

Das Zwischengehäuse verbindet die abtriebsseitigen Stirnseiten der Elektromotorengehäuse so, daß die Abtriebswellen im Inneren des Zwischengehäuses verlaufen. Die Antriebsmittel zum Antreiben der Schaltwalzen erstrecken sich durch eine Öffnung in dem Zwischengehäuse. Folglich kann die Anordnung aus Elektromotoren und Zwischengehäuse leicht montiert werden.

Von besonderem Vorteil ist es, wenn an den Abtriebswellen der Elektromotoren jeweils ein Abtriebszahnrad vorgesehen ist und an dem Zwischengehäuse zwei Übersetzungszahnräder drehbar gelagert sind, die mit jeweils einem der Abrtiebszahnräder kämmen.

Auf diese Weise kann eine drehmomenterhöhende oder - verringernde getriebliche Verbindung zwischen Elektromotoren und Schaltwalzen weitgehend in die Anordnung aus Elektromotoren und Zwischengehäuse integriert werden.

Dabei ist es von Vorzug, wenn das Zwischengehäuse eine Achse aufweist, die im Bereich der Öffnung vorgesehen ist und an der die Übersetzungszahnräder drehbar gelagert sind.

Hierdurch wird die drehbare Lagerung der Übersetzungszahnräder an dem Zwischengehäuse konstruktiv besonders günstig realisiert.

Gemäß einer weiteren bevorzugten Ausführungsform erstrecken sich die Übersetzungszahnräder durch die Öffnung aus dem Zwischengehäuse heraus.

Bei dieser Bauweise läßt sich die Anordnung aus Elektromotoren und Zwischengehäuse mit großer Flexibilität außen an einem Getriebegehäuse montieren. Die Übersetzungszahnräder können dann in das Getriebegehäuse hineinragen.

Ferner ist es von Vorzug, wenn jedes Übersetzungszahnrad ein erstes Zahnrad aufweist, das mit dem jeweiligen Abtriebszahnrad kämmt, und ein zweites Zahnrad aufweist, das drehfest mit dem ersten Zahnrad verbunden ist und mit einem jeweiligen Antriebszahnrad einer Schaltwalze kämmt.

Auf diese Weise kann bei insgesamt kompakter Bauweise eine hohe Übersetzung und damit eine hohe Drehmomenterhöhung oder -verringerung erzielt werden.

Von besonderem Vorzug ist es, wenn die zwei Schaltwalzen koaxial zueinander angeordnet sind.

Bei dieser Ausführungsform lassen sich die zwei Schaltwalzen auf vergleichsweise einfache Weise lagern, beispielsweise auf einer gemeinsamen Achse.

Dabei ist es bevorzugt, wenn die Schaltwalzen jeweils ein Antriebszahnrad aufweisen und wenn die Antriebszahnräder im Bereich einander zugewandter Abschnitte der Schaltwalzen angeordnet sind.

Durch diese Maßnahme wird erreicht, daß der Antrieb beider Schaltwalzen in räumlich enger Nachbarschaft zueinander erfolgen kann. Als einander zugewandte Bereiche der Schaltwalzen sollen vorliegend jeweils die Bereiche gelten, die zwischen Schaltspuren und einer zugehörigen Stirnseite der Schaltwalzen angeordnet sind.

Gemäß einer weiteren bevorzugten Ausführungsform sind die Schaltwalzen innerhalb eines Getriebegehäuses drehbar gelagert, das eine Getriebegehäuseöffnung aufweist, und die Anordnung aus Elektromotoren und Zwischengehäuse ist außen an dem Getriebegehäuse festgelegt, so, daß die Zwischengehäuseöffnung und die Getriebegehäuseöffnung miteinander ausgerichtet sind.

Auf diese Weise können die Schaltwalzen in konstruktiv günstiger Weise innerhalb des Getriebegehäuses gelagert werden, und der eigentliche Antrieb erfolgt durch eine Öffnung in dem Getriebegehäuse, wobei eine kompakte Anordnung aus Elektromotoren und Zwischengehäuse außen an dem Getriebegehäuse festgelegt ist.

Ferner ist es von Vorteil, wenn jede der Schaltwalzen umfänglich verteilte Vertiefungen aufweist, die jeweils einer Schaltposition entsprechen, und wenn gehäusefest angeordnete, elastisch vorgespannte Rastmittel in den Schaltpositionen in eine jeweilige Vertiefung greifen.

Auf diese Weise können die Schaltwalzen in den jeweiligen Schaltpositionen "einrasten", wodurch sich die Steuerbarkeit der Drehposition verbessert.

Schließlich ist es von Vorteil, wenn am Umfang jeder Schaltwalzen ein Magnetring festgelegt ist, mittels dessen sich die Drehposition der jeweiligen Schaltwalze berührungslos, messen läßt. Hierzu sind auch nicht-magnetische, berührende oder berührungslose Drehpositionsgeber denkbar. Ein Magnetring hat jedoch den Vorteil einer berührungslosen Messung bei relativ geringer Verschmutzungsempfindlichkeit.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigt:

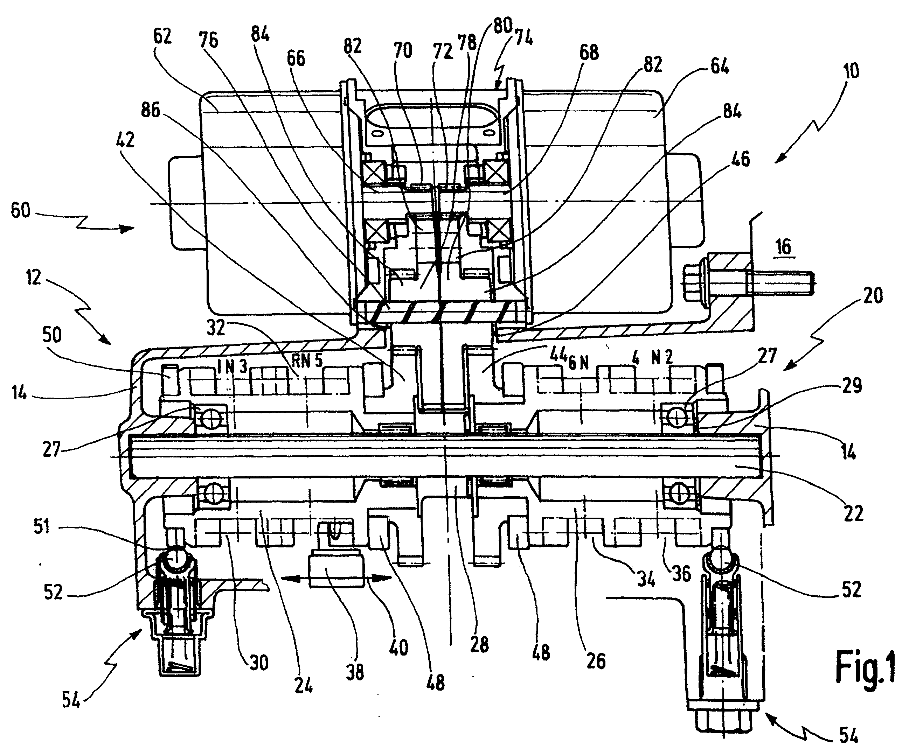

- Fig. 1: eine schematische Darstellung einer erfindungsgemäßen Schaltanordnung.

In Fig. 1 ist eine Schaltanordnung für ein mehrgängiges Doppelkopplungs-Schaltgetriebe generell mit 10 bezeichnet.

Ein Doppelkopplungs-Schaltgetriebe, das schematisch bei 12 angedeutet ist, beinhaltet ein Getriebegehäuse 14, das an ein Kupplungsgehäuse 16 angeflanscht ist.

Im Inneren des Getriebegehäuses 14 ist eine Schaltwalzenanordnung 20 vorgesehen.

Die Schaltwalzenordnung 20 beinhaltet eine in dem Getriebegehäuse 14 gelagerte Schaltwalzenwelle 22. An der Schaltwalzenwelle 22 sind eine erste Schaltwalze 24 und eine zweite Schaltwalze 26 mittels Wälzlagern 27 drehbar gelagert. Zwischen den zwei Schaltwalzen 24, 26 ist ein Axiallager 28 vorgesehen. Zwischen einem der Wälzlager 27 und dem Getriebegehäuse 14 ist eine selektive Paßscheibe 29 vorgesehen, die dazu dient, Längentoleranzen bei der Montage auszugleichen.

Die erste Schaltwalze 24 weist zwei Umfangsspuren 30, 32 auf. Die Umfangsspur 30 dient zum Schalten der Gänge 1 und 3. Die Umfangsspur 32 dient zum Schalten der Gänge R und 5.

Die zweite Schaltwalze 26 weist ebenfalls zwei Umfangsspuren 34, 36 auf. Die Umfangsspur 34 dient zum Schalten des sechsten Ganges des Getriebes 12. Die Umfangsspur 36 dient zum Schalten der Gänge 2 und 4.

Bei 38 ist schematisch ein Mitnehmer gezeigt, der in die Umfangsspur 32 greift. Entsprechende Mitnehmer greifen in die anderen Umfangsspuren 30, 34 und 36.

Die Umfangsspuren 30 bis 36 sind jeweils so geformt, daß eine Drehung der jeweiligen Schaltwalzen 24, 26 zu einem axialen Versatz des Mitnehmers 38 führt, was schematisch bei 40 angedeutet ist.

Die Mitnehmer 38 sind formschlüssig mit jeweiligen Schaltgabeln zur Betätigung der Schaltkupplungen (nicht dargestellt) des Doppelkupplungsgetriebes 12 verbunden. Die Schaltkupplungen dienen jeweils zum Herstellen eines Formschlusses zwischen einer Getriebewelle und einem daran drehbar gelagerten Losrad, wie es im Stand der Technik allgemein bekannt ist.

Bei den Schaltvorgängen auf die jeweiligen Schaltwalzen 24, 26 wirkende Axialkräfte werden durch die Lagerung der Schaltwalzen 24, 26, insbesondere durch das zwischen den Schaltwalzen 24, 26 angeordnete Axiallager 28, aufgenommen.

Die Schaltwalze 24 weist im Bereich benachbart zu dem Axiallager 28 ein Antriebszahnrad 42 auf. Entsprechend weist die Schaltwalze 26 in ihrem Bereich benachbart zu dem Axiallager 28 ein Antriebszahnrad 44 auf.

Die Antriebszahnräder 42, 44 liegen folglich vergleichsweise eng beieinander, lediglich getrennt durch das Axiallager 28.

In dem Getriebegehäuse 14 ist eine Öffnung 46 vorgesehen, und zwar in einem Bereich direkt oberhalb der zwei Antriebszahnräder 42, 44. Die Getriebegehäuseöffnung 46 ist so ausgebildet, daß hinreichend Raum vorhanden ist, so daß Zahnräder von außerhalb des Getriebegehäuses 14 in kämmenden Eingriff mit den Antriebszahnrädern 42, 44 gelangen können.

Die Schaltwalzen 24, 26 weisen jeweils einen Magnetring 48 auf, der zur Drehpositionserfassung der jeweiligen Schaltwalze mittels geeigneter Sensoren dient. Der Magnetring 48 ist jeweils zwischen dem Antriebszahnrad 42 bzw. 44 und einem zentralen Abschnitt der jeweiligen Schaltwalze 24, 26 angeordnet. In Fig. 1 erkennt man, daß der Magnetring 48 beispielsweise auf einen Wellenvorsprung des jeweiligen Antriebszahnrades 42, 44 aufgepreßt sein kann.

An den voneinander abgewandten Bereichen weisen die Schaltwalzen 24, 26 jeweils einen Rastring 50 auf. Der Rastring 50 ist ein Stahlring mit einer Mehrzahl von umfänglich verteilten Vertiefungen 51. Die Lage der Vertiefungen 51 entspricht dabei jeweiligen Schaltpositionen.

An dem Getriebegehäuse 14 sind ferner Rastmittel 54 gelagert, die eine Kugel 52 elastisch gegen den Rastring 50 andrücken. Folglich rasten die Schaltwalzen 24, 26 in ihren jeweiligen Schaltpositionen ein. Hierdurch wird die Ansteuerbarkeit der Schaltpositionen verbessert.

Außen an dem Getriebegehäuse 14 ist eine Antriebsanordnung 60 vorgesehen.

Die Antriebsanordnung 60 weist einen ersten, axial kurzbauenden Elektromotor 62 sowie einen zweiten, ebenfalls axial kurzbauenden Elektromotor 64 auf.

Die zwei Elektromotoren 62, 64 können identisch sein. Die zwei Elektromotoren 62, 64 sind koaxial so zueinander angeordnet, daß ihre jeweiligen Abtriebswellen 66 bzw. 68 aufeinander zuweisen. Genauer gesagt sind die Stirnseiten der zwei Abtriebswellen 66, 68 unmittelbar benachbart zueinander.

An den Enden der Abtriebswellen 66, 68 ist jeweils ein Abtriebszahnrad 70 bzw. 72 vorgesehen. Die Abtriebszahnräder 70, 72 sind mit ihrer jeweiligen Abtriebswelle 66, 68 drehfest verbunden.

Die zwei Elektromotoren 62, 64 sind über ein Zwischengehäuse 74 miteinander verbunden und bilden so eine kompakte, leicht handzuhabende Antriebsanordnung 60. Das Zwischengehäuse ist jeweils an Stirnseiten der Elektromotoren 62, 64 festgelegt und verbindet diese starr miteinander. Die Gehäuse der Elektromotoren 62, 64 bilden folglich gemeinsam mit dem Zwischengehäuse 74 ein Gehäuse der Antriebsanordnung 60.

An dem Zwischengehäuse 74 ist eine Achse 76 vorgesehen. An der Achse 76 sind zwei Übersetzungszahnräder 78, 80 jeweils drehbar gelagert.

Jedes der Übersetzungszahnräder 78, 80 weist ein. erstes Zahnrad 82 und ein drehfest hiermit verbundenes zweites Zahnrad 84 auf. In der dargestellten Ausführungsform sind das erste Zahrad 82 und das zweite Zahnrad 84 zur Bildung der Übersetzungszahnräder 78, 80 jeweils einstückig miteinander verbunden.

Das erste Zahnrad 82 des Übersetzungszahnrades 78 kämmt mit dem Abtriebszahnrad 70 des Elektromotors 62. Das erste Zahnrad 82 des Übersetzungszahnrades 80 kämmt mit dem Abtriebszahnrad 72 des Elektromotors 64.

Die Achse 76 ist nahe im Bereich einer Zwischengehäuseöffnung 86 vorgesehen.

Die Antriebsanordnung 60 ist außen an dem Getriebegehäuse 14 so festgelegt, daß die Zwischengehäuseöffnung 86 mit der Getriebegehäuseöffnung 46 ausgerichtet ist. Die Übersetzungszahnräder 78, 80 erstrecken sich aufgrund der Anordnung der Achse 76 nahe der Zwischengehäuseöffnung 86 durch die Zwischengehäuseöffnung 86 und durch die Getriebegehäuseöffnung 46 hindurch. Das zweite Zahnrad 84 des Übersetzungszahnrades 78 kämmt mit dem Antriebszahnrad 42 der Schaltwalze 24. Das zweite Zahnrad 84 des Übersetzungszahnrades 80 kämmt mit dem Antriebszahnrad 44 der Schaltwalze 26.

Die ersten Zahnräder 82 weisen jeweils eine wesentlich größere Zahnzahl auf als die zweiten Zahnräder 84. Die ersten Zahnräder 82 der zwei Übersetzungszahnräder 78, 80 sind, entsprechend der benachbarten Lage der Abtriebszahnräder 70, 72 ebenfalls benachbart zueinander angeordnet. Aufgrund ihrer größeren radialen Ausdehnung erstrecken sich die ersten Zahnräder 82 in einen Raum zwischen den Antriebszahnrädern 42, 44, dessen Breite im wesentlichen durch das Axiallager 28 bestimmt ist. Folglich ergibt sich insgesamt eine nicht nur vom Abstand zwischen den Achsen der Elektromotoren 62, 64 und der Achse der Schaltwalzen 24, 26 her kompakte Anordnung. Die Schaltanordnung 10 baut auch in Axialrichtung besonders kompakt. Durch die Anordnung der Elektromotoren 62, 64 so, daß deren Abtriebswellen 66, 68 aufeinander zuweisen, können die Antriebsmittel zwischen Elektromotor und Schaltwalze besonders kompakt und als Gleichteile ausgebildet werden. Bei einer Montage der Antriebsanordnung 60 außerhalb des Getriebegehäuses und einer Lage der Schaltwalzenanordnung 20 im Inneren des Getriebegehäuses 14 können die Öffnungen 46, 86 in dem Getriebegehäuse 14 bzw. dem Zwischengehäuse 74 folglich klein ausgebildet werden. Die Gehäusestruktur wird nicht besonders geschwächt.

Das Konzept mit zwei Schaltwalzen in Verbindung mit einem Doppelkupplungsgetriebe ist von besonderem Vorteil, insbesondere dann, wenn der einen Schaltwalze die ungeraden Gänge für den einen Kraftübertragungszweig des Doppelkupplungsgetriebes und der anderen Schaltwalze die geraden Gänge für den anderen Kraftübertragungszweig des Doppelkupplungsgetriebes zugeordnet werden.

Auf diese Weise können nicht nur direkt aufeinander folgende Gangwechsel (beispielsweise vom ersten in den zweiten Gang) ohne Zugkraftunterbrechung, also unter Last durchgeführt werden. Auch Gangwechsel über zwei Gänge hinweg (beispielsweise von 6 nach 3, von 5 nach 2 oder von 3 nach 1 oder umgekehrt) können unter Last durchgeführt werden. Diese Dreifachschaltungen können durchgeführt werden, ohne daß dazwischen liegende Gänge eingelegt werden müssen, wie bei einem sequentiellen Getriebe mit nur einer Schaltwalze. Von besonderem Vorteil ist dies bei sog. "Kick-down"-Schaltungen, Notbremsen, etc.

Die Schaltanordnung 10 läßt sich jedoch nicht nur auf Doppelkupplungsgetriebe 12 anwenden, sondern auch auf automatisierte Schaltgetriebe mit nur einer Anfahr- und Trennkupplung.

Aufgrund der Verteilung der Gänge auf zwei Schaltwalzen läßt sich insbesondere ein Herausschaukeln eines Fahrzeugs mittels eines automatisierten Getriebes leichter realisieren, bei dem schnell zwischen beispielsweise dem zweiten und dem Rückwärtsgang hin- und hergeschaltet wird.

Durch das Zweischaltwalzen-Konzept ergibt sicher ferner die Möglichkeit, eine Notfallfunktion bei Ausfall einer der zwei Schaltwalzen zu realisieren.

Es versteht sich, daß die zwei Schaltwalzen jeweils deutlich kleiner ausgebildet sein können (kleinerer Walzendurchmesser) als eine einzelne Schaltwalze, so daß der Raumbedarf gegenüber einer einzelnen Schaltwalze in radialer Richtung verringert wird. Ferner ergibt sich eine insgesamt geringere Belastung der jeweiligen Einzelteile über die Lebensdauer der Schaltanordnung, da die jeweiligen Teile jeweils nur die Hälfte der Schaltungen "erfahren". Durch eine hohe Anzahl von identischen Teilen lassen sich Kostenvorteile erzielen. Die Montage der offenbarten Schaltanordnung ist besonders einfach.

## Patentansprüche

1. Schaltanordnung (10) für ein mehrgängiges Schaltgetriebe (12), insbesondere für Kraftfahrzeuge, mit zwei Schaltwalzen (24, 26), die jeweils wenigstens einem Gang (1, 3, 5, R bzw. 2, 4, 6) zugeordnet sind, und mit zwei Elektromotoren (62, 64), die jeweils eine der zwei Schaltwalzen (24, 26) antreiben,
**dadurch gekennzeichnet, daß**
die zwei Elektromotoren (62, 64) koaxial zueinander angeordnet sind, so, daß die Abtriebswellen (66, 68) der zwei Elektromotoren (62, 64) aufeinander zuweisen, daß ferner die zwei Elektromotoren (62, 64) über ein Zwischengehäuse (74) miteinander verbunden sind, und daß das Zwischengehäuse (74) eine Öffnung (86) aufweist, durch die hindurch sich von den Elektromotoren (62, 64) angetriebene Antriebsmittel (78, 80) zum Antreiben der Schaltwalzen (24, 26) erstrecken.

2. Schaltanordnung nach Anspruch 1, **dadurch gekennzeichnet, daß** an den Abtriebswellen (66, 68) der Elektromotoren (62, 64) jeweils ein Abtriebszahnrad (70, 72) vorgesehen ist und daß an dem Zwischengehäuse (74) zwei Übersetzungszahnräder (78, 80) drehbar gelagert sind, die mit jeweils einem der Abtriebszahnräder (70, 72) kämmen.

3. Schaltanordnung nach Anspruch 2, **dadurch gekennzeichnet, daß** das Zwischengehäuse (74) eine Achse (76) aufweist, die im Bereich der Öffnung (86) vorgesehen ist und an der die Übersetzungszahnräder (78, 80) drehbar gelagert sind.

4. Schaltanordnung nach Anspruch 2 oder 3, **dadurch gekennzeichnet, daß** die Übersetzungszahnräder (78, 80) sich durch die Öffnung (86) aus dem Zwischengehäuse (74) heraus erstrecken.

5. Schaltanordnung nach einem der Ansprüche 2 - 4, **dadurch gekennzeichnet, daß** jedes Übersetzungszahnrad (78, 80) ein erstes Zahnrad (82) aufweist, das mit dem jeweiligen Abtriebszahnrad (70, 72) kämmt, und ein zweites Zahnrad (84) aufweist, das drehfest mit dem ersten Zahnrad (82) verbunden ist und mit einem jeweiligen Antriebszahnrad (42, 44) einer Schaltwalze (24, 26) kämmt.

6. Schaltanordnung nach einem der Ansprüche 1 - 5, **dadurch gekennzeichnet, daß** die zwei Schaltwalzen (24, 26) koaxial zueinander angeordnet sind.

7. Schaltanordnung nach Anspruch 6, **dadurch gekennzeichnet, daß** die Schaltwalzen (24, 26) jeweils ein Antriebszahnrad (42, 44) aufweisen und daß die Antriebszahnräder (42, 44) im Bereich einander zugewandter Abschnitte der Schaltwalzen (24, 26) angeordnet sind.

8. Schaltanordnung nach einem der Ansprüche 1 - 7, **dadurch gekennzeichnet, daß** die Schaltwalzen (24, 26) innerhalb eines Getriebegehäuses (14) drehbar gelagert sind, das eine Getriebegehäuseöffnung (46) aufweist, und daß die Anordnung (60) aus Elektromotoren (62, 64) und Zwischengehäuse (74) außen an dem Getriebegehäuse (14) festgelegt ist, so, daß die Zwischengehäuseöffnung (86) und die Getriebegehäuseöffnung (46) miteinander ausgerichtet sind.

9. Schaltanordnung nach einem der Ansprüche 1 - 8, **dadurch gekennzeichnet, daß** jede der Schaltwalzen (24, 26) umfänglich verteilte Vertiefungen (51) aufweist, die jeweils einer Schaltposition entsprechen, und daß gehäusefest angeordnete, elastisch vorgespannte Rastmittel (54) in den Schaltpositionen in eine jeweilige Vertiefung (51) greifen.

10. Schaltanordnung nach einem der Ansprüche 1 - 9, **dadurch gekennzeichnet, daß** am Umfang jeder Schaltwalze (24, 26) ein Magnetring (48) festgelegt ist, mittels dessen sich die Drehposition der jeweiligen Schaltwalze (24, 26) berührungslos messen läßt.

## Claims

1. Gear shift arrangement (10) for a multispeed gearbox (12), in particular for vehicles with two shift drums (24, 26), which are assigned in each case at least one range (1, 3, 5, R or 2, 4, 6) and with two electric motors (62, 64), which in each case drive one of the two shift drums (24, 26),
**characterised in that** the two electric motors (62, 64) are arranged coaxially with one another so that the driven shafts (66, 68) of the two electric motors (62, 64) are allocated to one another, that also the two electric motors (62, 64) are also connected via an intermediate casing (74) with one another, and that the intermediate casing (74) has an opening (86), through which drive means (78, 80) to operate the shift drums (24, 26) driven by the electric motors (62, 64) extend.

2. Gear shift arrangement according to claim 1, **characterised in that** on the driven shafts (66, 68) of the electric motors (62, 64) in each case a driven gear wheel (70, 72) is provided and that on the intermediate casing (74) two transmission gear wheels (78, 80) are rotatably mounted, which in each case engage in one of the driven gear wheels (70, 72).

3. Gear shift arrangement according to claim 2, **characterised in that** the intermediate casing (74) has an axle (76), which is provided in the vicinity of the opening (86) and on which the transmission gear wheels (78, 80) are rotatably mounted.

4. Gear shift arrangement according to claim 2 or 3, **characterised in that** the transmission gear wheels (78, 80) extend through the opening (86) from the intermediate casing (74).

5. Gear shift arrangement according to any of claims 2 - 4, **characterised in that** each transmission gear wheel (78, 80) has a first gear wheel (82), which engages into the particular driven gear wheel (70, 72), and has a second gear wheel (84), which is rigidly connected with the first gear wheel (82) and engages into a particular driving gear wheel (42, 44) of a shift drum (24, 26).

6. Gear shift arrangement according to any of claims 1 - 5, **characterised in that** the two shift drums (24, 26) are arranged coaxially with one another.

7. Gear shift arrangement according to claim 6, **characterised in that** the shift drums (24, 26) in each case have a drive gear wheel (42, 44) and **in that** the drive gear wheels (42, 44) are arranged in the vicinity of sections of the shift drums (24, 26) facing one another.

8. Gear shift arrangement according to any of claims 1 - 7, **characterised in that** the shift drums (24, 26) are rotatably mounted inside a gearbox casing (14), which has a gearbox casing opening (46), and **in that** the arrangement (60) of electric motors (62, 64) and intermediate casing (74) is defined outside on the gearbox casing (14), so that the intermediate casing opening (86) and the gearbox casing opening (46) are aligned with one another.

9. Gear shift arrangement according to any of claims 1 - 8, **characterised in that** each of the shift drums (24, 26) has recesses (51) distributed over the circumference, which in each case correspond to a gear stage, and **in that** flexibly pre-tensioned locking means (54) arranged rigidly with the casing in the gear stages engage into a respective recess (51).

10. Gear shift arrangement according to any of claims 1 - 9, **characterised in that** a magnetic ring (48) is defined on the circumference of each shift drum (24, 26), by means of which the turning position of the particular shift drum (24, 26) can be measured without any contact.

## Revendications

1. Dispositif de commande (10) pour une boîte de changement de vitesses (12) à plusieurs rapports, en particulier pour véhicules automobiles, comportant deux cylindres de commande (24, 26) qui sont affectés chacun à au moins un rapport (1, 3, 5, R ou 2, 4, 6), et comportant deux moteurs électriques (62, 64) qui entraînent chacun l'un des deux cylindres de commande (24, 26),
**caractérisé en ce que**
les deux moteurs électriques (62, 64) sont disposés coaxialement l'un à l'autre, de manière que les arbres menés (66, 68) des deux moteurs électriques (62, 64) soient dirigés l'un vers l'autre, **en ce qu'**en outre les deux moteurs électriques (62, 64) sont reliés entre eux par un boîtier intermédiaire (74) et **en ce que** le boîtier intermédiaire (74) présente une ouverture (86) à travers laquelle s'étendent des moyens d'entraînement (78, 80) entraînés par les moteurs électriques (62, 64), pour l'entraînement des cylindres de commande (24, 26).

2. Dispositif de commande selon la revendication 1, **caractérisé en ce que** sur chacun des arbres menés (66, 68) des moteurs électriques (62, 64) est prévue une roue dentée (70, 72), et **en ce que** sur le boîtier intermédiaire (74) sont montées deux roues dentées de transmission (78, 80) qui engrènent chacune avec l'une des roues dentées menées (70, 72).

3. Dispositif de commande selon la revendication 2, **caractérisé en ce que** le boîtier intermédiaire (74) comporte un axe (76) qui est prévu dans la zone de l'ouverture (86) et sur lequel sont montées tournantes les roues dentées de transmission (78, 80).

4. Dispositif de commande selon la revendication 2 ou 3, **caractérisé en ce que** les roues dentées de transmission (78, 80) s'étendent vers l'extérieur du boîtier intermédiaire (74), à travers l'ouverture (86).

5. Dispositif de commande selon l'une des revendications 2 à 4, **caractérisé en ce que** chaque roue dentée de transmission (78, 80) comporte une première roue dentée (82) qui engrène avec la roue dentée menée (70, 72) respective, ainsi qu'une deuxième roue dentée (84) qui est liée solidairement en rotation à la première roue dentée (82) et qui engrène avec une roue dentée d'entraînement (42, 44) respective d'un cylindre de commande (24, 26).

6. Dispositif de commande selon l'une des revendications 1 à 5, **caractérisé en ce que** les deux cylindres de commande (24, 26) sont disposés coaxialement l'un à l'autre.

7. Dispositif de commande selon la revendication 6, **caractérisé en ce que** les cylindres de commande (24, 26) comportent chacun une roue dentée d'entraînement (42, 44) et **en ce que** les roues dentées d'entraînement (42, 44) sont disposées dans la zone de parties tournées l'une vers l'autre des cylindres de commande (24, 26).

8. Dispositif de commande selon l'une des revendications 1 à 7, **caractérisé en ce que** les cylindres de commande (24, 26) sont montés tournants à l'intérieur d'un carter à engrenages (14), qui comporte une ouverture (46) du carter à engrenages et **en ce que** l'agencement (60) constitué des moteurs électriques (62, 64) et du boîtier intermédiaire (74) est fixé à l'extérieur sur le carter à engrenages (14), de manière que l'ouverture (86) du boîtier intermédiaire et l'ouverture (46) du carter à engrenages soient alignés.

9. Dispositif de commande selon l'une des revendications 1 à 8, **caractérisé en ce que** chacun des cylindres de commande (24, 26) présente des renfoncements (51) répartis périphériquement qui correspondent chacun à une position de commande, et **en ce que** des moyens d'encliquetage (54) précontraints élastiquement, disposés de manière fixe sur le boîtier, pénètrent dans les positions de commande dans un renfoncement (51) correspondant.

10. Dispositif de commande selon l'une des revendications 1 à 9, **caractérisé en ce que** sur le pourtour de chaque cylindre de commande (24, 26) est fixé un anneau magnétique (48) au moyen duquel on peut mesurer sans contact la position de rotation du cylindre de commande (24, 26) respectif.
